# EUROPÄISCHE PATENTANMELDUNG

(11) **EP 1 203 973 A1**
(43) Veröffentlichungstag der Anmeldung: **08.05.2002**
(21) Anmeldenummer: 00124063.9
(22) Anmeldetag: 06.11.2000
(51) Int. Cl.: G02B 6/44

(54) **Schutzrohr für die Aufnahme von wenigstens einem Datenleitungskabel, Verbinderelement und Verfahren zum Verlegen von Datenleitungskabeln in einem Kanalsystem**

(71) Anmelder: KA-TE System AG, CH-8041 Zürich (CH); Sougou Kaihatsu Kouji Co., Ltd., Yokohama-shi, Kanagawa 240-0025 (JP); Alpha Trading Co., Ltd., Tokyo 101-0023 (JP)
(72) Erfinder: Bunschi, Hans, ch-8753 Mollis (CH); Schreibelt, Albert, 8118 Pfaffhausen (CH); Weingarten, Marco, 8807 Freienbach (CH); Kodaira, Toshitada, Chiyoda-ku, Tokyo 101 (JP); Nakaura, Masayuki, Yokohama (JP)
(74) Vertreter: Patentanwälte Schaad, Balass, Menzl & Partner AG

(57) **Zusammenfassung**

Die Erfindung betrifft ein Schutzrohr (1) für die Aufnahme von wenigstens einem Datenleitungskabel (5, 5') zum Verlegen innerhalb eines Kanalsystems (10), dadurch gekennzeichnet, dass das Schutzrohr (1) wenigstens ein Hauptrohrstück (2, 2', 2'') und wenigstens ein über ein Verbinderelement (4, 4') mit diesem verbundenes Nebenrohrstück (3, 3') aufweist, wobei an das Verbinderelement (4, 4') wenigstens ein weiteres Hauptrohrstück (2, 2', 2'') anschliessbar ist und wobei das wenigstens eine Nebenrohrstück (3, 3') und das wenigstens eine Hauptrohrstück (2, 2', 2'') in sich beweglich sind. Die Erfindung betrifft weiterhin ein Verbinderelement (4, 4') zum Aufbau eines solchen Schutzrohrs (1) und ein Verfahren zum Verlegen von Datenleitungskabeln (5, 5') mit einem solchen Schutzrohr (1).

## Beschreibung

Die Erfindung betrifft ein Schutzrohr für die Aufnahme von wenigstens einem Datenleitungskabel nach dem Oberbegriff von Anspruch 1, ein Verbinderelement zum Verbinden zweier Rohrstücke nach dem Oberbegriff von Anspruch 5 und ein Verfahren zum Verlegen von Datenleitungskabeln in einem Kanalsystem dem Oberbegriff von Anspruch 11.

Auf Grund der zunehmenden Bedeutung der Telekommunikation werden über leitungsgebundene Kommunikationsnetze mehr und mehr Daten übertragen. Im unmittelbaren Zugangsbereich eines Kommunikationsnetzes zu einzelnen privaten Nutzern wird zur Datenübertragung regelmässig das Telefonnetz verwendet. Da dieses im Zugangsbereich hauptsächlich aus Kupfer-Doppelleitungen besteht, die nicht auf grosse Datenströme ausgelegt sind, weist es nur sehr begrenzte Datenübertragungskapazität. Das Ersetzen oder Ergänzen eines solchen bestehenden Kommunikationsnetzes durch Datenleitungen mit höherer Datenübertragungskapazität gestaltet sich auf Grund der Vielzahl der Teilnehmer und der baulichen Situation in Städten und Gemeinden sehr schwierig und kostenaufwendig. Zum Verlegen neuer Datenleitungen in der Erde wären umfangreiche Grabungsarbeiten notwendig, die insbesondere in grösseren Städten kaum flächendeckend zu realisieren sind. Es wurde daher vorgeschlagen, zum Verlegen neuer Datenleitungen ein bereits bestehendes Kanalsystem, wie beispielsweise ein Abwasserkanalsystem oder ein Gasleitungssystem, zu nutzen. Beispielsweise verbindet der in allen Städten und Kommunen zwingend vorgeschriebene Abwasseranschluss sämtliche Gebäude über ein dicht verzweigtes Netz aus Haupt- und Nebenkanälen. Als Nebenkanal wird im folgenden der von einer Abzweigungsstelle direkt zu einem einzelnen Gebäude führende Kanal bezeichnet. Als Hauptkanal werden Kanäle bezeichnet, von denen mehrere Nebenkanäle abzweigen und über die mehrere Gebäude erreichbar sind.

In der WO 00/06843 wird vorgeschlagen, das Verlegen von Datenkabeln mit der Sanierung des Kanalsystems zu verbinden. Datenkabel aufnehmende Schutzrohre werden mit einem Schlauch verbunden, der durch Einziehen oder Umstülpen in den Kanal verbracht, dort aufgeblasen wird und an die Kanalwandung geschmiegt aushärtet. Das Schlauchinnere dient als neue Abwasserleitung. Der Schlauch bringt das Datenleitunskabel an Ort und Stelle innerhalb des Kanals und schützt es vor mechanischen Einflüssen. Mit diesem Verfahren lassen sich relativ einfach Datenleitungen innerhalb eines Hauptkanals verlegen, wenn keine Zuläufe bzw. Nebenkanäle vorhanden sind. Problematisch ist allerdings das Verlegen der Datenleitungen über einen vom Hauptkanal abzweigenden Nebenkanal bis hin zu einem Gebäude. Die WO 00/06843 schlägt dazu vor, im Bereich von Abzweigungsstellen von Nebenkanälen eine Schutzdose (Datenbox) vorzusehen, in welche die im Hauptkanal geführten Datenleitungen münden. Innerhalb der Datenbox sind die Datenleitungen des Hauptkanals mit im Nebenkanal verlegten Datenleitungen verbindbar. Die einfache Verlegung von Datenkabeln durch Haupt- und Nebenkanal bleibt weiterhin problematisch.

Zum Verlegen von Datenkabeln ist es weiterhin bekannt, mit einem speziell dafür ausgebildeten Roboter in kleinen Abständen Klammern in die lichten Querschnitte der Abwasserleitungen einzusetzen und daran Schutzrohre zu befestigen. Auch hier ist das Verlegen innerhalb der Nebenkanäle problematisch, da die bekannten Kabelverlegeroboter für den typischen Querschnitt eines Nebenkanals zu gross sind und sich in den dort oft vorhandenen Kurven nicht fortbewegen können. Auch ist keine befriedigende Lösung zur Realisierung der Datenkabelführung im Bereich der Abzweigung vom Hauptkanal in einen Nebenkanal bekannt, bei der die Datenkabel sowohl gegen Kontakt mit der Umgebung, insbesondere mit Abwasser, als auch gegen mechanische Verletzung, insbesondere gegen Abknicken und Verletzung durch Nagetiere, geschützt sind.

Der Erfindung liegt daher die Aufgabe zugrunde, unter Vermeidung der genannten Nachteile des Standes der Technik ein Schutzrohr zur Aufnahme von Datenkabeln, insbesondere Lichtwellenleiterkabeln, zur Verfügung zu stellen, welches sich insbesondere in Nebenkanälen eines nur an einzelnen Stellen zugänglichen und ansonsten geschlossenen Kanalsystems einfach verlegen lässt und die aufgenommenen Datenleitungskabel insbesondere im Bereich der Abzweigungsstellen vor mechanischer Überbeanspruchung schützt. Der Erfindung liegt weiterhin die Aufgabe zugrunde, ein Verfahren zum Verlegen von Datenträger aufnehmenden Schutzrohren anzugeben, mit welchem das Verlegen insbesondere in Nebenkanälen vereinfacht wird. Der Erfindung liegt weiterhin die Aufgabe zugrunde, Mittel anzugeben, mit denen Schutzrohre zur knicksicheren Aufnahme von Datenleitungskabeln auf einfache Weise bereitgestellt werden können.

Die Aufgabe wird gelöst durch ein Schutzrohr zur Aufnahme von wenigstens einem Datenleitungskabel mit den Merkmalen von Anspruch 1. Ein einfaches Konfigurieren eines solchen Schutzrohrs gelingt mit einem Verbinderelement zum Verbinden von wenigstens drei Rohrstücken mit den Merkmalen von Anspruch 5. Die Aufgabe wird weiterhin gelöst durch ein Verfahren zum Verlegen von Datenleitungskabeln in einem Kanalsystem mit den Merkmalen von Anspruch 11. Vorteilhafte Weiterbildungen ergeben sich aus den abhängigen Ansprüchen, der Beschreibung und der Zeichnung.

Das erfindungsgemässe Schutzrohr besteht in seiner einfachsten Ausgestaltung aus einem Hauptrohrstück und einem Nebenrohrstück, das über ein Verbinderelement mit dem Hauptrohrstück verbunden ist. An das Verbinderelement ist wenigstens ein weiteres Hauptrohrstück anschliessbar. Das Hauptrohrstück bzw. die Hauptrohrstücke sind im Anwendungsfall in einem Hauptkanal eines Kanalsystems verlegt. Über das Verbinderelement und das daran angeschlossene Nebenrohrstück wird ein Schutzrohr mit wenigstens einer Abzweigung in einen Nebenkanal des Kanalsystems realisiert. Zum Verlegen von Datenleitungskabeln zu einer Mehrzahl von Gebäuden eignet sich ein Schutzrohr mit einer entsprechenden Anzahl von Nebenrohrstücken, die von einer verzweigten oder unverzweigten Kette aus über Verteiler-elemente verbundenen Hauptrohrstücken abzweigen. Das Verbinderelement dient dazu, die Haupt- und Nebenrohrstücke zusammenzuhalten und insbesondere das in den Nebenkanal abzweigende Datenkabel vor äusserer mechanischer Belastung zu schützen und einen minimalen Biegeradius vorzugeben. Erfindungsgemäss ist das wenigstens eine Nebenrohrstück biegsam, um das verzweigte Schutzrohr platzsparend in einem zusammengelegten Zustand in das Kanalsystem einführen zu können und die Nebenrohrstücke unterirdisch in den entsprechenden Nebenkanälen zu positionieren. Das wenigstens eine Hauptkanalstück ist vorzugsweise relativ zum Verteilerelement beweglich, insbesondere um seine Rohrachse drehbar, um das Schutzrohr flach an der Kanalwandung anliegend positionieren und Abzweigungen in unterschiedliche Richtungen realisieren zu können. Auch das Hauptrohrstück kann biegsam sein. Die Beweglichkeit Neben- und gegebenenfalls Hauptrohrstücks kann beispielsweise realisiert werden, indem diese aus gegeneinander beweglichen Segmenten oder aus einem flexiblen Kunststoff bestehen. Vorzugsweise sind Material, Durchmesser und Wanddicke des Haupt- und Nebenrohrstücks so gewählt, dass bei einem vorgegebenen Innendurchmesser, der an die Anzahl der aufzunehmenden Datenleitungskabel angepasst ist, das Rohrstück unter den im Kanalsystem üblicherweise herrschenden Belastungen weitgehend formstabil ist. Damit ist sichergestellt, dass innerhalb des Schutzrohres keine Verengungen entstehen, die bereits aufgenommene Datenleitungskabel verletzen bzw. die Aufnahme neuer Datenleitungskabel verunmöglichen.

Das Innere des Schutzrohres ist vorzugsweise kanten- und absatzlos, um Datenleitungskabel insbesondere beim Durchziehen durch das Rohr nicht zu verletzen. Dazu sind die Bereiche zwischen dem Verbinderelement und dem Haupt- und Nebenrohrstück im Inneren des Schutzrohrs geglättet.

Um den Montageaufwand zu vermindern, kann das Verbinderelement integraler Bestandteil eines Haupt- oder eines Nebenrohrstücks sein.

Vorzugsweise wird das erfindungsgemässe Schutzrohr baukastenartig aus Haupt- und Nebenrohrstücken zusammengesetzt, die durch Verbinderelemente verbunden werden. Die Längen der Haupt- und Nebenrohrstücke und die Richtung der Abzweigung, d.h. die Orientierung und Art des Verbinderelements, werden dabei vor dem Einbau in das Kanalsystem an dessen Topologie angepasst. Das Schutzrohr wird oberirdisch fertig konfiguriert und dann als Ganzes in das Kanalsystem eingeführt. Auf diese Weise erübrigt sich eine aufwendige Montage im Kanalinnern, insbesondere im Bereich der Abzweigungen der Nebenkanäle und den Nebenkanälen selbst.

Die Erfindung wird nachfolgend anhand der Zeichnung näher erläutert. Dabei zeigen rein schematisch:
- Fig. 1: Ein erfindungsgemässes Schutzrohr in einem zur Einführung in ein Kanalsystem vorbereiteten Zustand mit umgelegten Nebenrohrstücken;
- Fig. 2: das Schutzrohr aus Fig. 1 mit ausgestreckten Nebenrohrstücken;
- Fig. 3: das Schutzrohr aus Fig. 1 und 2 in der Einbaulage in einem Kanalsystem;
- Fig. 4-7: Beispiele für erfindungsgemässe Verbinderelemente.

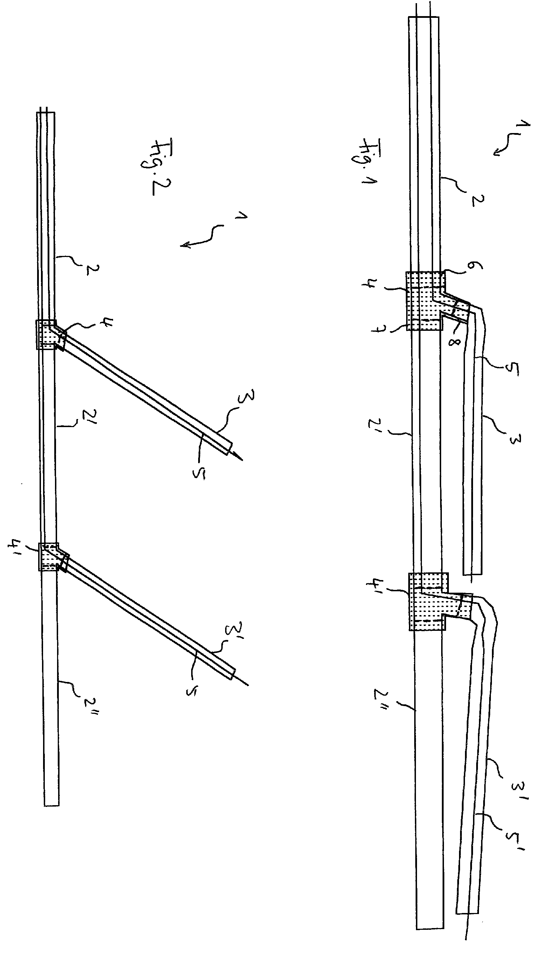

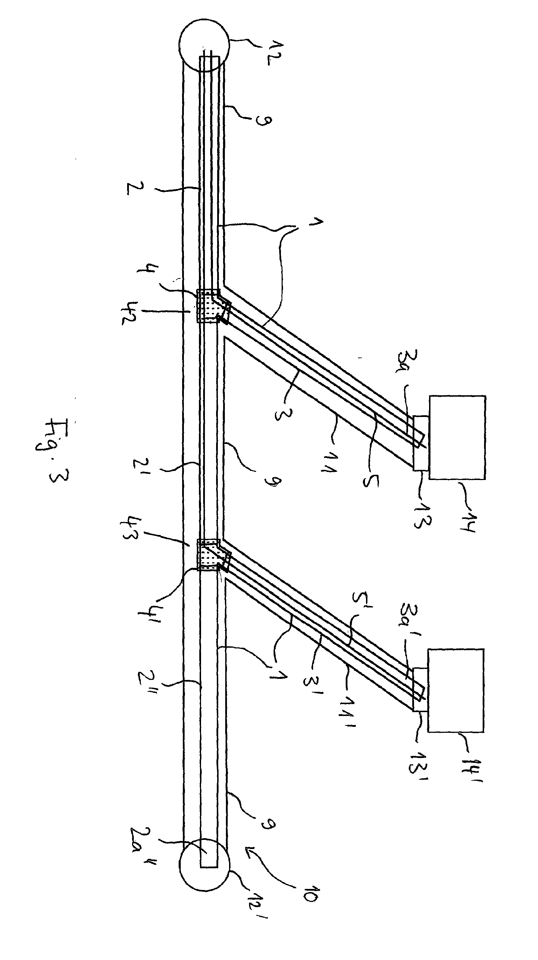

Fig. 1 zeigt ein erfindungsgemässes Schutzrohr 1, welches hier aus drei Hauptrohrstücken 2, 2', 2" und zwei Nebenrohrstücken 3, 3' sowie zwei Verbinderelementen 4, 4' besteht. Fig. 2 zeigt das Schutzrohr 1 aus Fig. 1 in einem Zustand mit ausgestreckten Nebenrohrstücken 3, 3'. Gleiche Teile sind hier mit gleichen Bezugszeichen versehen.

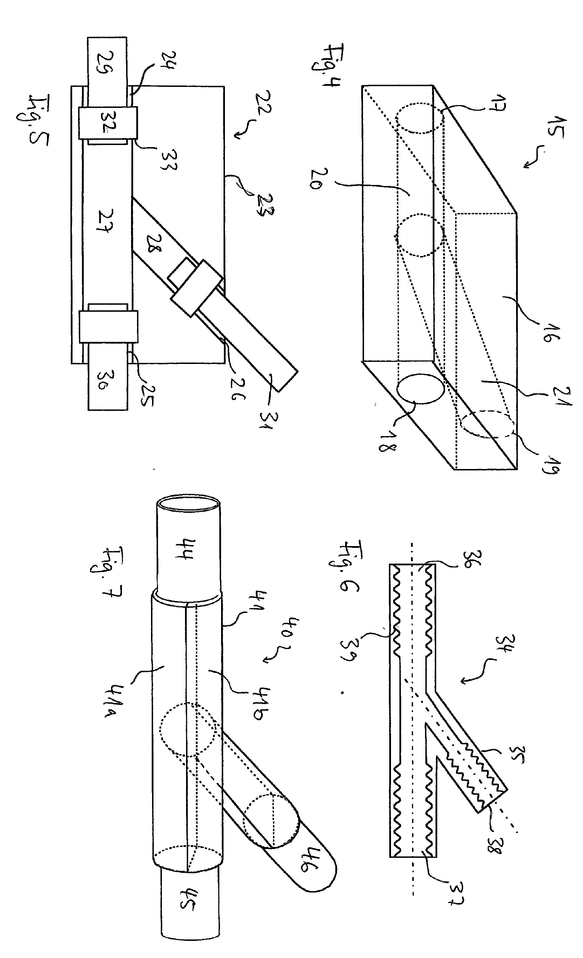

Mit den entlang einer gemeinsamen Achse angeordneten Hauptrohrstücken 2, 2', 2'' wird eine Hauptröhre zur Aufnahme von Datenleitungskabeln realisiert, welche im Anwendungsfall innerhalb eines Hauptkanals eines Abwasser-oder ähnlichen Kanalsystems angeordnet wird. Von dieser Hauptleitung zweigen hier erfindungsgemäss Nebenrohrstücke 3, 3' ab. Die Abzweigung wird durch Verbinderelemente 4, 4' realisiert. Beide haben jeweils einen ersten und einen zweiten Anschluss 6, 7 für ein Hauptrohrstück sowie einen weiteren Anschluss 8 für ein Nebenrohrstück. Die Anschlüsse sind im Inneren des Verbinderelements 4, 4' durch einen Hohlraum verbunden, siehe Fig. 4 - 7. Durch eine gewisse Flexibilität der Rohrstücke 2, 2', 2'', 3, 3' wird hier erreicht, dass die Nebenrohrstücke 3, 3' in Richtung auf die betreffenden Hauptrohrstücke 2', 2'' abgebogen werden können. Damit ist es möglich, das gesamte verzweigte Schutzrohr in relativ kompakter Form, d.h. mit geringer lateraler Ausdehnung, in das Kanalsystem einzuführen. Durch die Flexibilität der Rohrstücke ist gewährleistet, dass das Schutzrohr 1 Biegungen der Kanalstücke folgen kann.

Das ausgestreckte Schutzrohr 1 aus Fig. 2 in seiner Einbaulage in einem Kanalsystem 10 ist in Fig. 3 dargestellt. Das Kanalsystem 10 umfasst hier einen geraden Hauptkanal 9 mit zwei abzweigenden Nebenkanälen 11, 11', die jeweils ein Gebäude 14, 14' mit dem Hauptkanal 9 verbinden. Der Hauptkanal ist über einen Hauptzugang 12, z.B. einen Schacht, von aussen zugänglich, so dass ein gemäss Fig. 1 zusammengelegtes Schutzrohr 1 und gegebenenfalls weiteres Material, z.B. Montageroboter, in das Kanalsystem eingeführt werden können. Das Kanalsystem weist des weiteren Nebenzugänge 13, 13' auf, die sich in oder an den Gebäuden 14, 14' befinden und vergleichsweise einfach über das Gebäude 14, 14' erreichbar sind.

Das Schutzrohr 1, das sich in Fig. 3 bereits in der Einbaulage befindet, wird wie folgt in das Kanalsystem 10 eingeführt: Anhand eines Planes des Kanalsystems 10 wird ein Schutzrohr 1 aus einer Mehrzahl von Haupt- und Nebenrohrstücken 2, 2', 2'', 3, 3' und Verbinderelementen 4, 4' so zusammengesetzt, dass die Längen der Rohrstücke an die entsprechenden Kanalstücke angepasst sind. So entspricht die Länge des ersten Hauptrohrstücks 2 dem Abstand des Hauptzugangs 12 von einer Abzweigungsstelle 42 des ersten Nebenkanals 11, die Länge des zweiten Hauptrohrstücks 2' dem Abstand dieser ersten Abzweigungsstelle 42 von einer zweiten Abzweigungsstelle 43 des zweiten Nebenkanals 11' und die Längen der Nebenrohrstücke 3, 3' den Längen des entsprechenden Nebenkanals 11, 11' bzw. dem Abstand des entsprechenden Nebenzugangs 13, 13' von der jeweiligen Abzweigungsstelle 42, 43. Von den Gebäuden 14, 14' aus werden über die Nebenzugänge 13, 13' Führungsseile durch die Nebenkanäle 11, 11' zum Hauptkanal geführt, beispielsweise eingeschwemmt oder mittels Druckluft eingeblasen. Die Führungsseile werden weiter über den Hauptkanal 9 zum Hauptzugang 12 geführt, beispielsweise indem ein Montageroboter die freien Enden aufnimmt. Die Führungsseile werden nun mit den freien Enden 3a, 3a' den Nebenrohrstücken 3, 3' verbunden. Ein weiteres Führungsseil ist am freien Ende 2a'' des vordersten Hauptrohrstücks 2'' befestigt und ist durch den Hauptkanal 9 von einem weiteren Hauptzugang 12' zum ersten Hauptzugang 12 geführt. Das gemäss Fig. 1 zusammengelegte verzweigte Schutzrohr 1 wird nun durch vorzugsweise gleichzeitiges Ziehen an den Führungsseilen im Bereich des weiteren Hauptzugangs 12' und der Nebenzugänge 13, 13' in das Kanalsystem eingeführt. Auf diese Weise wird erreicht, dass die Nebenrohrstücke 3, 3' in die ihnen zugeordneten Nebenkanäle 11, 11' eingeführt werden. Beim gleichzeitigen Ziehen gleiten die Nebenrohrstücke 13, 13' in die entsprechenden Nebenkanäle 11, 11'. Datenleitungen 5, 5' werden entweder vor dem Einführen des Schutzrohrs 1 in das Schutzrohr 1 eingeführt oder eingezogen, nachdem das Schutzrohr in das Kanalsystem eingeführt wurde. Im letzteren Fall weist das Schutzrohr vorzugsweise in seinem Inneren Führungsleinen auf, mit denen die einzuziehenden Datenleitungskabel in ihre Bestimmungsposition gebracht werden können.

Alternativ zum Einführen des Schutzrohrs 1 mittels Führungsleinen kann das Schutzrohr durch Ziehen am vorderen Ende 3a" in den Hauptkanal 9 eingebracht werden. Die freien Enden 3a, 3a' der Nebenrohrstücke 3, 3' können dann beim Passieren der entsprechenden Abzweigungsstellen 42, 42' mit geeigneten mechanischen Mitteln von den Nebenzugängen 13, 13' aus ergriffen und zu den Nebenzugängen 13, 13' gezogen werden, z.B. mit einer Rute, die an ihrem Ende einen Greifer, einen Haken und/oder einen Magneten aufweist.

Das in das Kanalsystem 10 verbrachte Schutzrohr 1 wird in zuvor mittels eines geeigneten Montageroboters an der Kanalwandung montierten Halteelementen, insbesondere an Innenbriden, befestigt, beispielsweise in diese eingehakt oder eingeklemmt. Um das Schutzrohr in den Nebenkanälen zu befestigen und es vor dem Abwasserfluss und vor mechanischer Verletzung, z.B. bei Kanalarbeiten oder durch Nagetiere, zu schützen, wird vorzugsweise wenigstensn in den Nebenkanal ein aufblasbarer und anschliessend aushärtender sogenannter Liner-Schlauch eingeführt. Dieser schmiegt sich im aufgeblasenen Zustand an die Kanalwandung und das Schutzrohr an und verankert dieses so zwischen seiner Aussenhaut und der Kanalwandung. Das Innere des Schlauchs bildet nunmehr die neue Abwasserleitung.

In den Fig. 4 bis 7 sind Beispiele für erfindungsgemässe Verbinderelemente dargestellt. Fig. 4 zeigt ein Verbinderelement 15 mit einem quaderförmigen Grundkörper 16. Dieser weist zwei Anschlüsse 17, 18 für Hauptrohrstücke und einen Anschluss 19 für Nebenrohrstücke auf, die durch einen Hohlraum in Form einer zylinderförmigen Bohrung 20 mit einer Abzweigung 21 verbunden sind. Der Hohlraum ist im Bereich der Anschlüsse 17, 18, 19 vorzugsweise mit einem Innengewinde versehen, das zum Einschrauben der Enden der entsprechenden Haupt- und Nebenrohrstücke dient, so dass ein in axiale Richtung zugfestes Schutzrohr hergestellt werden kann. Das in Fig. 4 gezeigte quaderförmige Verbinderelement 15 lässt sich sehr einfach aus einem Materialblock, z.B. aus Metall oder Kunststoff, herstellen. Die äussere Form des Materialblocks wird vorzugsweise so gestaltet, dass sich das Verbinderelement 15 in seiner Bestimmungsposition möglichst gut an die Kanalwand anschmiegt.

Fig. 5 zeigt ein weiteres Beispiel eines Verbinderelements 22 mit einem quaderförmigen Grundkörper 23 und angeschlossenen Haupt- und Nebenrohrstücken 29, 30, 31 im Querschnitt. Der Grundkörper 23 weist einen Hohlraum in Form einer zylinderförmigen Bohrung 27 mit einer Abzweigung 28 auf, dessen Enden Anschlüsse 24, 25, 26 für Rohrstücke 29, 30, 31 bilden. Der Hohlraum weist im Bereich der Anschlüsse 24, 25, 26 jeweils eine Hinterschneidung 33 auf, deren Form an die Grösse einer auf die Rohrenden aufgeschraubten Mutter 32 angepasst ist. Indem der Grundkörper 23 entlang einer Ebene, die durch die Mittelebene des Hohlraums verläuft, zweigeteilt ist, können die mit Muttern 32 versehenen Rohrenden in das Verteilerelement 22 eingesetzt werden. Die zwei im wesentlichen spiegelsymmetrisch gestalteten Teile des Grundkörpers 23 werden dann aufeinander gesetzt und mit geeigneten Mitteln, z.B. Klammern, miteinander verbunden.

Fig. 6 zeigt ein weiteres Beispiel eines Verteilerelements 34 mit einem Grundkörper 35 in Form eines Y-artig verzweigten Rohres mit einem geraden Rohrstück und einer davon abgehenden Abzweigung. Die Enden des geraden Rohrstücks bilden Anschlüsse 36, 37 für Hauptrohrstücke. Das Ende des abzweigenden Rohrstücks bildet einen Anschluss 38 für ein Nebenrohrstück. Das Innere des Grundkörpers 35 ist im Bereich der Anschlüsse 36, 37, 38 mit einem Innengewinde 39 zum Einschrauben der entsprechenden Haupt- und Nebenrohrstücke versehen.

Fig. 7 zeigt ein weiteres Beispiel eines Verteilerelements 40 mit einem Grundkörper 41 in Form eines verzweigten Rohres, z.B. gemäss Fig. 6. Der Grundkörper 41 ist hier in zwei Hälften 41a, 41b zweigeteilt. Die Befestigung der Haupt- und Nebenrohrstücke 44, 45, 46 im Inneren des Verbinderelements 40 erfolgt beispielsweise nach dem in Fig. 5 gezeigten Prinzip.

Zwischen den Anschlüssen besteht vorzugsweise eine elektrisch leitfähige Verbindung, damit das Schutzrohr als Blitzableiter fungieren kann.

## Patentansprüche

1. Schutzrohr (1) für die Aufnahme von wenigstens einem Datenleitungskabel (5, 5') zum Verlegen innerhalb eines Kanalsystems (10), **dadurch gekennzeichnet, dass** das Schutzrohr (1) wenigstens ein Hauptrohrstück (2, 2', 2'', 29, 30, 44, 45) und wenigstens ein über ein Verbinderelement (4, 4', 15, 22, 34, 40) mit diesem verbundenes Nebenrohrstück (3, 3', 31, 46) aufweist, wobei an das Verbinderelement (4, 4', 15, 22, 34, 40) wenigstens ein weiteres Hauptrohrstück (2, 2', 2'', 29, 30, 44, 45) anschliessbar ist und wobei das wenigstens eine Nebenrohrstück (3, 3', 31, 46) biegsam ist und wenigstens ein Hauptrohrstück (2, 2', 2'', 29, 30, 44, 45) relativ zum Verbinderelement weglich sind.

2. Schutzrohr (1) nach Anspruch 1, **dadurch gekennzeichnet, dass** es aus einer Mehrzahl von Hauptrohrstücken (2, 2', 2'', 29, 30, 44, 45), die über Verbinderelemente (4, 4', 15, 22, 34, 40) in Form einer unverzweigten oder verzweigten Kette verbunden sind, und von der Kette an einzelnen oder allen Verbinderelementen (4, 4', 15, 22, 34, 40) abzweigenden Nebenrohrstücken (3, 3', 31, 46) besteht.

3. Schutzrohr (1) nach Anspruch 1 oder 2, **dadurch gekennzeichnet, dass** im Inneren des Schutzrohrs (1) die Bereiche zwischen dem Verbinderelement (4, 4', 15, 22, 34, 40) und dem wenigstens einen Hauptrohrstück (2, 2', 2'', 29, 30, 44, 45) bzw. dem wenigstens einen Nebenrohrstück (3, 3', 31, 46) im wesentlichen absatz- und kantenlos sind, vorzugsweise indem das Innere des Schutzrohrs (1) in den genannten Bereichen geglättet ist.

4. Schutzrohr (1) nach einem der vorangegangenen Ansprüche, **dadurch gekennzeichnet, dass** das Verbinderelement (4, 4', 15, 22, 34, 40) integraler Bestandteil eines Haupt- oder eines Nebenrohrstücks (2, 2', 2'', 29, 30, 44, 45; 3, 3', 31, 46) ist.

5. Verbinderelement (4, 4', 15, 22, 34, 40) zum Verbinden von wenigstens drei Rohrstücken, bestehend aus einem Grundkörper (16, 23, 35, 41) mit wenigstens zwei Hauptanschlüssen (6, 7, 17, 18, 24, 25, 36, 37) zum Anbringen von zwei Hauptrohrstücken (2, 2', 2", 29, 30, 44, 45) und wenigstens einem Nebenanschluss (8, 19, 26, 38) zum Anbringen von wenigstens einem Nebenrohrstück (3, 3', 31, 46), wobei der Grundkörper (16, 23, 35, 41) einen Hohlraum zur Durchführung von Datenleitungskabeln zwischen den Haupt- und Nebenanschlüssen (6, 7, 17, 18, 24, 25, 36, 37; 8, 19, 26, 38) aufweist.

6. Verbinderelement (4, 4', 15, 22, 34, 40) nach Anspruch 5, **dadurch gekennzeichnet, dass** der Hohlraum in seiner Wandung im Bereich der Anschlüsse (6, 7, 17, 18, 24, 25, 36, 37; 8, 19, 26, 38) jeweils ein Gewinde (39) zum Einschrauben eines Rohrstücks aufweist.

7. Verbinderelement (4, 4', 15, 22, 34, 40) nach Anspruch 5 oder 6, **dadurch gekennzeichnet, dass** der Grundkörper (16, 23, 35, 41) aus zwei Teilen besteht, die derart relativ zueinander beweglich sind, dass der Hohlraum zum Einbringen von Gegenständen zugänglich ist.

8. Verbinderelement (4, 4', 15, 22, 34, 40) nach Anspruch 7, **dadurch gekennzeichnet, dass** der Hohlraum im Bereich der Anschlüsse (6, 7, 17, 18, 24, 25, 36, 37; 8, 19, 26, 38) jeweils eine Hinterschneidung (33) aufweist, die derart ausgebildet ist, dass ein Rohrstück mit einer Verdickung, vorzugsweise mit einer auf das Rohrende aufgeschraubten Mutter (32), aufgenommen werden kann.

9. Verbinderelement (4, 4', 15, 22, 34, 40) nach einem der Ansprüche 5 bis 8, **dadurch gekennzeichnet, dass** der Grundkörper (16, 23, 35, 41) aus einem elektrisch leitfähigen Material besteht oder zumindest zwischen zwei Hauptanschlüssen (6, 7, 17, 18, 24, 25, 36, 37) sowie zwischen einem Haupt- und einem Nebenanschluss (6, 7, 17, 18, 24, 25, 36, 37; 19, 26, 38) eine elektrisch leitfähige Verbindung aufweist.

10. Schutzrohr (1) nach einem der Ansprüche 1 bis 4 mit einem Verbinderelement (4, 4', 15, 22, 34, 40) nach einem der Ansprüche 5 bis 9.

11. Verfahren zum Verlegen von Datenleitungskabeln (5, 5') in einem Kanalsystem (10), insbesondere einem kommunalen Wasser-, Gas- oder Abwasserleitungssystem, mit wenigstens einem einen Hauptzugang (12, 12') aufweisenden Hauptkanal (9) und wenigstens einem davon an einer Abzweigungsstelle (42, 43) abzweigenden, zu einem Nebenzugang (13, 13') führenden Nebenkanal (11, 11'), **dadurch gekennzeichnet, dass** ein Schutzrohr (1) für die Aufnahme von wenigstens einem Datenleitungskabel (5, 5') mit wenigstens einem Hauptrohrstück (2, 2', 2'', 29, 30, 44, 45) und wenigstens einem mit diesem verbundenen, relativ zu diesem beweglichen Nebenrohrstück (3, 3', 31, 46) in den Hauptkanal (9) eingeführt wird und dass das Hauptrohrstück (2, 2', 2", 29, 30, 44, 45) in einem Hauptkanal (9) und das Nebenrohrstück (3, 3', 31, 46) in einem vom Hauptkanal (9) abzweigenden Nebenkanal (11, 11') positioniert wird.

12. Verfahren nach Anspruch 11, **dadurch gekennzeichnet, dass** das Schutzrohr (1) vor dem Einführen so konfiguriert wird, dass die Länge eines Nebenrohrstücks (3, 3', 31, 46) an die Länge des entsprechenden Nebenkanals (11, 11') und die Länge eines Hauptrohrstücks (2, 2', 2'', 29, 30, 44, 45) an die Länge des Hauptkanals (9) zwischen zwei Abzweigungsstellen (42, 43) von Nebenkanälen (11, 11') bzw. zwischen dem Hauptzugang (12) und einer Abzweigungsstelle (42, 43) angepasst ist.

13. Verfahren nach Anspruch 11 oder 12, **dadurch gekennzeichnet, dass** zur Führung der vorhandenen Nebenrohrstücke (3, 3', 31, 46) in die ihnen zugeordneten Nebenkanäle (11, 11') von den Nebenzugängen (13, 13') Führungsseile in die Nebenkanäle (11, 11') eingeführt, vorzugsweise eingeschwemmt oder eingeblasen, werden, die über den Hauptkanal (9) zu einem Hauptzugang (12, 12') geführt und dort mit Enden (3a, 3a') der entsprechenden Nebenrohrstücke (3, 3', 31, 46) verbunden werden.

14. Verfahren nach Anspruch 11 oder 12, **dadurch gekennzeichnet, dass** ein Ende (3a, 3a') eines Nebenrohrstücks (3, 3', 31, 46) beim Passieren einer Abzweigungsstelle (42, 42') vom Nebenzugang (13, 13') aus ergriffen und zum Nebenzugang (13, 13') gezogen wird, vorzugsweise mit einer vom Nebenzugang (13, 13') aus zur Abzweigungsstelle (42, 42') geführten Rute mit einem geeigneten Greifelement.

15. Verfahren nach einem der Ansprüche 11 bis 14, **dadurch gekennzeichnet, dass** das Schutzrohr (1) an wenigstens innerhalb des Hauptkanals (9) verlegten Befestigungselementen, vorzugsweise Briden, befestigt wird.

16. Verfahren nach einem der Ansprüche 11 bis 15, **dadurch gekennzeichnet, dass** wenigstens der Nebenkanal (11, 11'), vorzugsweise auch der Hauptkanal (9), nach dem Einführen des Schutzrohres (1) mit einem aufblasbaren und anschliessend aushärtenden Liner-Sschlauch ausgekleidet wird, der an der Kanalwandung anliegt und das Schutzrohr (1) zwischen sich und der Kanalwandung einschliesst.

17. Verwendung eines Schutzrohrs (1) nach einem der Ansprüche 1 bis 5, 10 zur Durchführung des Verfahrens nach einem der Ansprüche 11 bis 16.
